# FASCICULE DE BREVET EUROPEEN

(11) **EP 4 255 178 B1**
(45) Date de publication et mention de la délivrance du brevet: **25.09.2024**
(21) Numéro de dépôt: 21830450.9
(22) Date de dépôt: 24.11.2021
(51) Int. Cl.: A01K 45/00, A01K 43/00

(54) **DISPOSITIF INDIVIDUEL DE TRANSPORT D'OEUF, INSTALLATION DE REMPLISSAGE COMPLÉMENTAIRE ET PROCÉDÉ ASSOCIÉ**
INDIVIDUELLE EITRANSPORTVORRICHTUNG, KOMPLEMENTÄRE FÜLLANLAGE UND ZUGEHÖRIGES VERFAHREN
INDIVIDUAL EGG TRANSPORT DEVICE, COMPLEMENTARY FILLING INSTALLATION AND ASSOCIATED METHOD

(30) Priorité: 03.12.2020 FR 2012652; 07.01.2021 FR 2100126
(43) Date de publication de la demande: 11.10.2023
(73) Titulaire: Nectra, 29420 Plouvorn (FR)
(72) Inventeur: ADJANOHOUN, Ephrem, 35740 Pace (FR); YVIN, Jean-Claude, 29250 Plougoulm (FR)
(74) Mandataire: Novagraaf Technologies
(86) Numéro de dépôt international: PCT/FR2021/052083
(87) Numéro de publication internationale: WO 2022/117933

(56) Documents cités:
- WO-A1-2019/096372
- NL-A- 8 202 980

## Description

### Domaine technique de l'invention

La présente invention concerne les installations industrielles pour l'aviculture. L'invention concerne plus particulièrement les installations industrielles dans lesquelles des oeufs sont transportés sur des plateaux munis de logements, ou alvéoles, adaptés. Il s'agit en particulier d'oeufs fécondés prévus pour être transportés jusqu'à des incubateurs en vue de permettre la naissance de poussins.

### Arrière-plan technique

Dans les installations industrielles pour l'aviculture, il est nécessaire de trier les oeufs d'élevage en fonction de différentes catégories, en particulier en fonction de leur poids et afin de retirer les oeufs non fécondés ou non incubables en raison par exemple d'une mauvaise qualité, d'une coquille fêlée ou sale, d'un oeuf double, etc. Généralement les oeufs arrivent sur des plateaux de transport comportant un nombre N de logements. Les oeufs sont ensuite placés sur un tapis roulant où ils roulent jusqu'à des postes de tri. A la suite du tri, les oeufs d'une même catégorie sont regroupés, au cours d'une étape dite de retassage, pour être placés ensuite sur un plateau de transport.

Pendant que les oeufs roulent sur le tapis ils s'entrechoquent ce qui peut provoquer des micro-brisures sur les coquilles d'oeuf. De plus, en roulant les oeufs on augmente significativement les risques de contaminations.

NL 8 202 980 A et WO 2019/096372 A1 divulguent des supports d'oeufs destinés à contenir un oeuf dans un système de manutention d'oeufs industriel.

### Résumé de l'invention

L'invention propose un dispositif individuel de transport d'oeuf, comportant :
- une coupelle supérieure prévue pour recevoir un oeuf,
- un socle prévu pour assurer une position stable de la coupelle sur un élément de convoyage,
- un élément de préhension permettant à un organe de préhension de saisir le dispositif individuel pour le transporter d'un premier emplacement à un second emplacement.

Selon d'autres caractéristiques avantageuses du dispositif :
- l'élément de préhension comprend un aimant, ou une pièce métallique, qui est agencé sous la coupelle supérieure pour permettre à l'organe de préhension de saisir le dispositif individuel par attraction magnétique ;
- le dispositif individuel comporte une surface tel qu'un bossage apte à permettre la préhension du dispositif individuel par une ventouse ;
- il comporte une gorge périphérique ;
- le socle comporte des pastilles métalliques réparties sur le fond du socle. L'invention propose aussi un organe de préhension destiné à saisir un dispositif individuel de transport d'oeuf selon l'une des caractéristiques précédentes, caractérisé en ce qu'il comporte un bras muni d'une tige de préhension qui est montée coulissante par rapport au bras, en ce que l'extrémité libre de la tige de préhension comporte un embout de préhension apte à saisir le dispositif individuel par attraction magnétique, et en ce que le bras comporte à son extrémité libre, du côté de l'embout de préhension, une ventouse coaxiale à la tige de préhension, apte à saisir un oeuf par aspiration.

Selon d'autres caractéristiques avantageuses de l'organe de préhension :
- la tige de préhension est montée libre en coulissement dans le bras.

L'invention propose aussi un ensemble pour le transport d'oeuf, caractérisé en ce qu'il comporte un organe de préhension selon l'une des caractéristiques précédentes et un dispositif individuel selon l'une des caractéristiques précédentes.

L'invention propose aussi une navette de préhension mobile caractérisée en ce qu'elle comporte au moins N organes de préhension selon la caractéristique précédente, ces N organes de préhension étant aptes à saisir jusqu'à N oeufs disposés soit dans N logements d'un plateau de transport d'oeufs, soit dans N dispositifs individuels selon l'une des caractéristiques précédentes.

L'invention propose aussi une installation de remplissage de plateaux de transport d'oeufs caractérisée en ce qu'elle comporte :
- une première ligne de convoyage qui est prévue pour alimenter l'installation avec des plateaux de transport d'oeufs comportant N logements aptes à recevoir chacun un oeuf en position verticale,
- une seconde ligne de convoyage qui est prévue pour convoyer des dispositifs individuels selon l'une des caractéristiques précédentes,
- une troisième ligne de convoyage qui est prévue pour sortir des plateaux de transport d'oeufs comportant X logements aptes à recevoir chacun un oeuf en position verticale,
- au moins une navette de préhension, qui est mobile entre la première ligne de convoyage et la seconde ligne de convoyage, de manière à pouvoir :
   -- au cours d'une première étape, saisir un premier chargement d'oeufs sur un premier plateau comportant un nombre d'oeufs M inférieur à N, transporter le premier chargement d'oeufs jusqu'à la seconde ligne de convoyage, déposer le premier chargement d'oeufs dans un premier groupe de dispositifs individuels,
   -- au cours d'une seconde étape, saisir un second chargement d'oeufs disposé dans un second groupe de dispositifs individuels agencé sur la seconde ligne de convoyage, transporter le second chargement d'oeufs jusqu'à une troisième ligne de convoyage principale, déposer le second chargement d'oeufs dans les logements d'un plateau comportant X logements.

Selon d'autres caractéristiques de l'installation selon l'invention :
- la seconde ligne de convoyage comporte un premier poste en amont du flux de convoyage où les dispositifs individuels sont regroupés pour former le premier groupe, et un second poste en aval du flux de convoyage où les dispositifs individuels sont regroupés pour former le second groupe ;
- l'installation comporte une première navette de préhension qui transporte le premier chargement d'oeufs et une seconde navette de préhension qui est mobile entre le premier poste et un troisième poste agencé en amont, par rapport au premier poste, de manière à pouvoir transporter les dispositifs individuels vides du premier groupe depuis le premier poste jusqu'au troisième poste ;
- l'installation comporte une troisième navette de préhension qui transporte le second chargement d'oeufs ;
- la première ligne de convoyage et la troisième ligne de convoyage forment une seule ligne de convoyage principale et le nombre de logements N est égal au nombre de logements X.

L'invention propose aussi un procédé de remplissage de plateaux de transport d'oeufs, caractérisé en ce qu'il comporte les étapes suivantes :
- alimentation d'une première ligne de convoyage en plateaux de transport d'oeufs comportant N logements aptes à recevoir chacun un oeuf en position verticale,
- alimentation d'une seconde ligne de convoyage en dispositifs individuels,
- une première étape de transport d'un premier chargement d'oeufs avec la navette de préhension, depuis un premier plateau de la première ligne de convoyage jusqu'à un premier groupe de dispositifs individuels placé sur la seconde ligne de convoyage,
- une étape de regroupement au cours de laquelle les dispositifs individuels sont regroupés pour former un second groupe de dispositif individuels sur la seconde ligne de convoyage,
- une seconde étape de transport d'un second chargement d'oeufs disposé dans le second groupe de dispositifs individuels jusqu'à un plateau comportant X logements sur la troisième ligne de convoyage.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective qui représente un dispositif individuel de transport d'oeuf et un organe de préhension selon l'invention ;
[Fig.2] - la figure 2 est une vue en coupe axiale selon le plan de coupe 2-2 de la figure 1 qui représente le dispositif individuel de transport d'oeuf et l'organe de préhension selon l'invention ;
[Fig.3] - la figure 3 est une vue en coupe axiale selon le plan de coupe 3-3 de la figure 2 qui illustre la préhension d'un oeuf placé dans le dispositif individuel de transport d'oeuf par l'organe de préhension ;
[Fig.4] - la figure 4 est une vue en coupe axiale selon le plan de coupe 2-2 de la figure 2 qui illustre la préhension d'un dispositif individuel de transport d'oeuf par l'organe de préhension ;
[Fig.5] - la figure 5 est une vue en perspective qui représente une navette de préhension mobile équipée d'une série d'organes de préhension selon l'invention ;
[Fig.6] - la figure 6 est une vue de côté qui illustre les capacités de préhension de la navette de préhension de la figure 5 ;
[Fig.7] - la figure 7 est une vue en perspective qui représente une variante de la navette de préhension mobile de la figure 5 équipée d'une série d'organes de préhension dépourvus de ventouses ;
[Fig.8] - la figure 8 est une vue en perspective qui représente une installation de remplissage de plateaux de transport d'oeufs selon l'invention comportant une première et une seconde lignes de convoyage ;
[Fig.9] - la figure 9 est une vue de dessus qui représente une partie de l'installation de la figure 8 où une paire de plateaux partiellement remplis d'oeufs est présente sur la première ligne de convoyage et un premier groupe de dispositifs individuels d'un premier poste de regroupement sur la seconde ligne de convoyage est vide et attend de recevoir des oeufs d'un premier chargement ;
[Fig.10] - la figure 10 est une vue en perspective qui représente une partie du premier poste de regroupement de dispositifs individuels de transport d'oeufs sur la seconde ligne de convoyage ;
[Fig.11] - la figure 11 est une autre vue en perspective qui représente une partie du premier poste de regroupement de dispositifs individuels de transport d'oeufs sur la seconde ligne de convoyage ;
[Fig.12] - la figure 12 est une vue de dessus qui représente schématiquement le premier poste de regroupement après que les oeufs du premier chargement ont été déposés dans les dispositifs individuels du premier groupe ;
[Fig.13] - la figure 13 est une vue similaire à celle de la figure 12 qui représente schématiquement le premier poste de regroupement après que les dispositifs individuels vides restants ont été retirés du premier poste de regroupement ;
[Fig.14] - la figure 14 est une vue similaire à celle de la figure 12 qui représente schématiquement le premier poste de regroupement après la libération des dispositifs individuels munis d'oeufs et avant leur arrivée à un second poste de regroupement ;
[Fig.15] - la figure 15 est une vue en perspective qui représente schématiquement le second poste de regroupement avant le transfert du chargement d'oeufs vers des plateaux sur la première ligne de convoyage ;
[Fig.16] - la figure 16 est une vue similaire à celle de la figure 15 qui représente schématiquement le second poste de regroupement après le transfert du chargement d'oeufs vers les plateaux à remplir et avant le transfert des dispositifs individuels vides vers une zone d'alimentation amont de la seconde ligne de convoyage ;
[Fig.17] - la figure 17 est une vue en perspective qui représente schématiquement un premier mode de réalisation d'un dispositif de décrochage des dispositifs individuels équipant l'installation selon l'invention ;
[Fig.18] - la figure 18 est une vue en coupe axiale qui représente schématiquement une variante de réalisation d'un dispositif individuel de transport d'oeuf dans lequel l'élément de préhension comporte un bossage permettant une préhension par ventouse.

### Description détaillée de l'invention

Dans la description qui va suivre, des éléments identiques, similaires ou analogues seront désignés par les mêmes chiffres de référence.

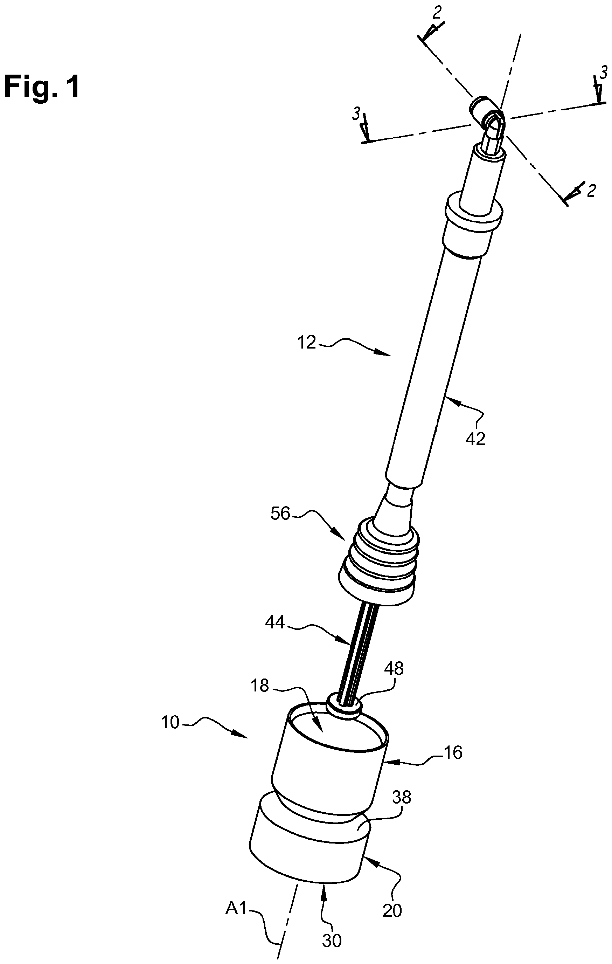

Sur les figures 1 à 4 on a représenté un dispositif individuel 10 de transport d'oeuf et un organe de préhension 12 apte à saisir soit un oeuf 14, soit un dispositif individuel 10 de transport d'oeuf.

Le dispositif individuel 10 de transport d'oeuf se présente sous la forme d'un gobelet et possède un corps principal 16 globalement cylindrique d'axe principal A1. Il comporte une coupelle supérieure 18 prévue pour recevoir un oeuf 14, et dans sa partie inférieure, un socle 20 prévu pour assurer une position stable de l'œuf 14 sur un élément de convoyage, par exemple lorsque le dispositif individuel 10 est positionné sur un tapis roulant.

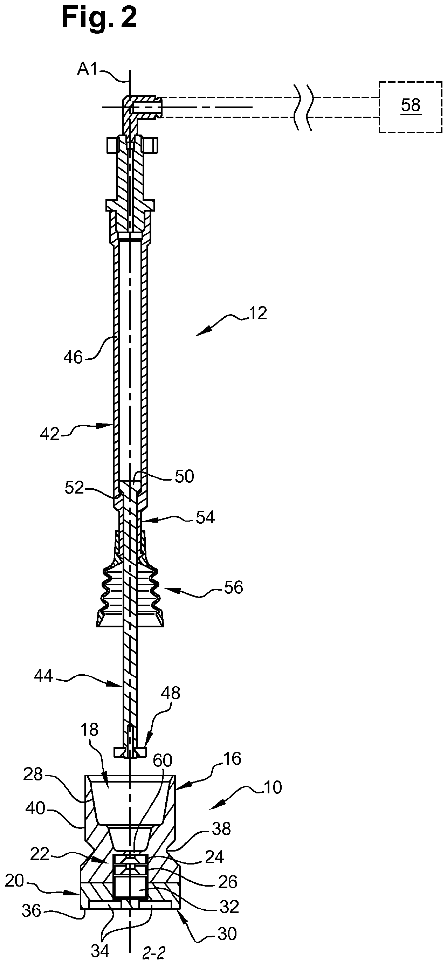

On note que le socle 20 peut être prévu pour permettre un déplacement libre du dispositif individuel 10, soit de manière active par l'intermédiaire de l'organe de préhension 12 qui vient saisir le dispositif individuel 10 et le déplacer d'un premier emplacement à un second emplacement, soit de manière passive par l'intermédiaire d'un agencement particulier sur un tapis roulant par exemple, des barres de rangement fixes (non représentées) pouvant permettre de récupérer les dispositifs individuels 10 grâce au déplacement relatif du tapis roulant par rapport aux barres de rangement. Comme on peut le voir notamment sur la figure 2, le dispositif individuel 10 comporte un élément de préhension 22 permettant à l'organe de préhension 12 de saisir le dispositif individuel 10 par attraction magnétique pour le transporter d'un premier emplacement à un second emplacement. A cet effet, le dispositif individuel 10 comporte ici au moins un aimant 24 agencé dans le fond d'un fût 26 aménagé dans le corps principal 16.

Le corps principal 16 du dispositif individuel 10 comporte dans son tronçon supérieur un alésage tronconique qui forme un réceptacle 28, ou coupelle 18, pour un oeuf 14. Du côté opposé à l'alésage tronconique 28, le fût 26 ou alésage cylindrique est aménagé pour recevoir l'aimant 24 formant un élément de préhension 22. L'élément de préhension 22 comporte ici deux aimants 24 superposés axialement. Chaque aimant 24 a par exemple la forme d'une rondelle coaxiale à l'axe A1 du dispositif individuel 10.

Un capot inférieur 30 est fixé sur la face inférieure du corps principal 16. Ce capot 30 ferme le fût 26 et retient les aimants 24 dans le fond du fût 26. Une entretoise 32 peut être prévue entre le capot 30 et les aimants 24 pour empêcher tout mouvement des aimants 24 dans le fût 26.

Le capot inférieur 30 forme ici le socle 20 du dispositif individuel 10. Avantageusement, des pièces métalliques, ici des rondelles 34, sont réparties circonférentiellement de manière régulière sur le fond du capot 30. Selon le mode de réalisation représenté, il s'agit de trois rondelles métalliques 34, ou pastilles, qui sont vissées dans le socle 20. Ces trois rondelles métalliques 34 ont ici des diamètres prévus pour qu'elles recouvrent le maximum de la surface inférieure 36 du socle 20. Avantageusement, le corps principal 16 comporte une gorge périphérique 38 sur tout le pourtour du corps principal 16, ici sensiblement à la même hauteur que l'aimant supérieur, au voisinage du socle 20.

Avantageusement, le diamètre extérieur du socle 20 et du corps principal 16 jusqu'à la gorge 38 est supérieur au diamètre extérieur de la partie supérieure 40 du corps principal 16, au niveau de la coupelle supérieure 18 ou du réceptacle 28.

On note que l'élément de préhension 22 peut être une pièce métallique si l'organe de préhension 12 comporte un aimant pour la préhension. Selon une autre variante de réalisation, l'élément de préhension 22 et l'organe de préhension 12 pourraient comporter chacun un aimant pour permettre la préhension par attraction magnétique.

Les figures 1 à 4 montrent aussi l'organe de préhension 12 selon l'invention destiné à saisir le dispositif individuel 10 de transport d'oeuf décrit précédemment.

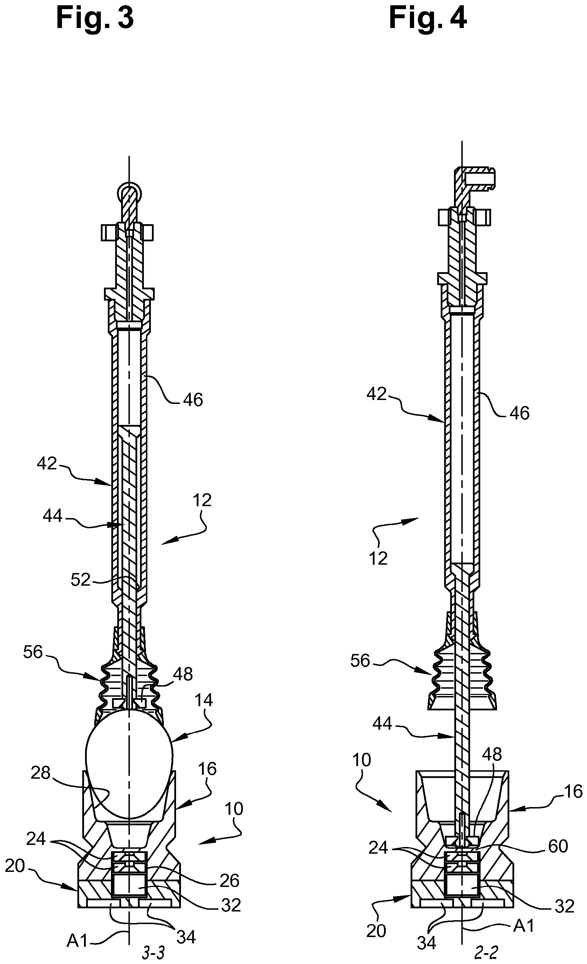

L'organe de préhension 12 comporte un bras 42 muni d'une tige de préhension 44 qui est montée coulissante par rapport au bras 42 dans un tube principal 46 suivant l'axe principal A1. L'extrémité libre de la tige de préhension 44 comporte un embout de préhension 48 apte à saisir le dispositif individuel 10 par attraction magnétique. L'embout de préhension 48 a ici la forme d'une rondelle métallique de diamètre similaire au diamètre des aimants 24 agencés dans le dispositif individuel 10, ce qui permet à l'embout de préhension 48 de saisir le dispositif individuel 10 grâce à l'attraction magnétique exercée par l'aimant 24 sur l'embout de préhension 48. La figure 4 illustre une position de l'organe de préhension 12 lorsque l'embout de préhension 48 saisit le dispositif individuel 10 par attraction magnétique. Selon une variante de réalisation, l'embout de préhension 48 pourrait comporter un aimant apte à coopérer avec une rondelle métallique agencée dans le dispositif individuel 10.

La tige de préhension 44 est ici montée libre en coulissement axialement dans le tube principal 46 du bras 42. L'extrémité axiale supérieure de la tige de préhension 44 comporte une butée 50 de diamètre supérieur au reste de la tige de préhension 44 de manière à coopérer avec un épaulement ou rétrécissement 52 aménagé à l'intérieur du tube principal 46 pour retenir axialement la tige de préhension 44 dans une position extrême basse. C'est cette position qui est représentée sur les figures 1, 2, et 4.

On note que la tige de préhension 44 occupe naturellement sa position basse sous l'effet de la gravité puisqu'elle est ici montée libre en coulissement dans le bras 42. Selon une variante de réalisation, le bras 42 pourrait être pourvu d'un mécanisme de commande de la position axiale de la tige de préhension 44 ou bien un élément élastique de rappel ou d'amortissement pourrait être prévu entre la tige de préhension 44 et le bras 42.

Le bras 42 comporte à son extrémité libre 54, ou extrémité inférieure, du côté de l'embout de préhension 48, une ventouse 56 coaxiale à la tige de préhension 44, apte à saisir un oeuf 14 par aspiration. La ventouse 56 a ici la forme d'un soufflet qui s'élargit vers le bas pour pouvoir s'adapter à différentes formes d'oeuf. La tige de préhension 44 est prévue pour coulisser axialement à travers la ventouse 56.

La ventouse 56 est raccordée à un système d'aspiration d'air 58 au travers du tube principal 46, ce qui permet à la ventouse 56 de saisir un oeuf 14 par aspiration, ou dépression. La figure 3 montre la ventouse 56 en position sur le sommet d'un oeuf 14 pour sa préhension.

On note que le jeu de coulissement de la tige de préhension 44 dans le bras 42 est suffisant pour permettre au système d'aspiration d'air 58 de créer une dépression dans la ventouse 56 au travers du tube principal 46.

On note que dans la position de la figure 3, l'embout de préhension 48 est en appui sur le sommet de l'œuf 14 et la tige de préhension 44 est repoussée vers le haut, à l'intérieur du tube principal 46.

Sur la figure 4, la tige de préhension 44 est représentée dans sa position basse, avec l'embout de préhension 48 positionné dans le fond du réceptacle 28 de la coupelle 18 de manière à permettre l'attraction magnétique entre l'embout de préhension 48 et les aimants 24. Dans cette position, l'embout de préhension 48 est donc collé contre le fond 60 du réceptacle 28 et le dispositif individuel 10 est donc lié en déplacement à la tige de préhension 44, donc à l'organe de préhension 12.

Avantageusement, l'organe de préhension 12 et le dispositif individuel 10 forment un ensemble pour le transport d'oeuf.

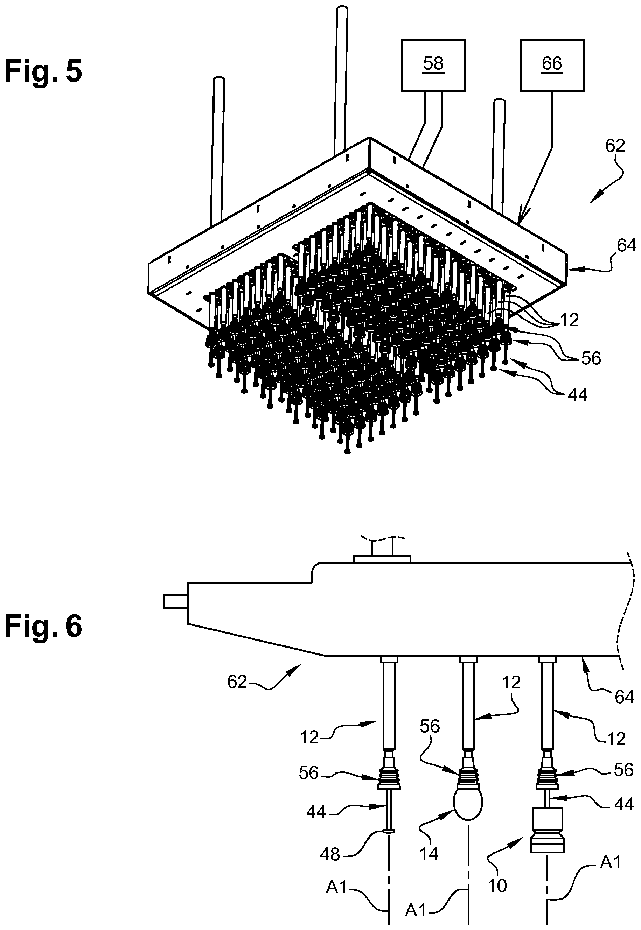

La figure 5 représente une navette de préhension 62 mobile qui comporte une multitude d'organes de préhension 12 tels que celui qui vient d'être décrit. Cette navette de préhension 62 comporte une platine principale 64, ici de forme globalement parallélépipédique, et les organes de préhension 12 sont montés sur la platine principale 64, du côté de sa face inférieure. Les organes de préhension 12 s'étendent donc parallèlement vers le bas en vue de pouvoir saisir un chargement d'oeufs 14 et/ou un chargement de dispositifs individuels 10, grâce aux ventouses 56 et aux embouts de préhension 48 respectivement.

A titre illustratif, la figure 6 représente partiellement la navette de préhension 62 lorsqu'un premier organe de préhension 12 (à gauche sur la figure 6) est vide, c'est-à-dire qu'il ne porte aucun élément et sa tige de préhension 44 occupe sa position basse extrême, lorsqu'un second organe de préhension 12 (au milieu sur la figure 6) saisit un oeuf 14 par aspiration au moyen de la ventouse 56, et lorsqu'un troisième organe de préhension 12 (à droite sur la figure 6) saisit un dispositif individuel 10 par attraction magnétique au moyen de la tige de préhension 44.

Ainsi, la navette de préhension 62 comporte N organes de préhension 12, ces N organes de préhension 12 étant aptes à saisir jusqu'à N oeufs 14 disposés soit dans N logements d'un plateau de transport d'oeufs, soit dans N dispositifs individuels 10. Ces N organes de préhension 12 sont aussi aptes à saisir jusqu'à N dispositifs individuels 10.

Avantageusement, la platine principale 64 comporte un système de réglage de l'espacement radial 66 entre les organes de préhension 12 ce qui permet d'adapter la forme du motif dessiné par la série d'organes de préhension 12 à la disposition des logements du plateau de transport d'oeufs et à la disposition des dispositifs individuels 10 agencés sur une surface plane.

La navette de préhension 62 comporte aussi un dispositif de raccordement des organes de préhension 12 au système d'aspiration d'air 58 de manière à pouvoir commander l'aspiration des oeufs 14 par les ventouses 56 de chaque organe de préhension 12. Le système d'aspiration d'air 58 est prévu aussi pour pouvoir fonctionner de manière inversée ce qui permet de souffler de l'air par la ventouse 56 pour décrocher les oeufs 14 lorsqu'ils ont arrivés à destination.

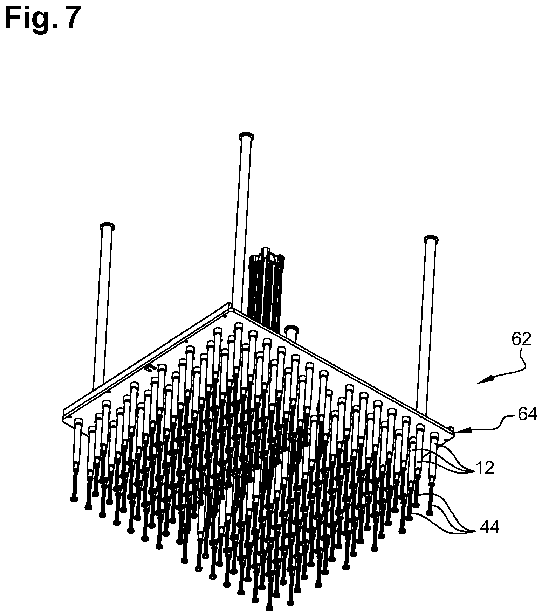

Sur la figure 7 on a représenté une variante de la navette de préhension 62 de la figure 5 dans laquelle les organes de préhension 12 sont prévus uniquement pour saisir des dispositifs individuels 10 et non pas pour saisir des oeufs 14. Les organes de préhension 12 sont similaires à ceux décrits précédemment excepté qu'ils ne comportent pas de ventouse 56 et pas de raccordement à une source de dépression d'air. Cette navette de préhension 62 sert uniquement à saisir et déplacer des dispositifs individuels 10 dépourvus d'oeufs.

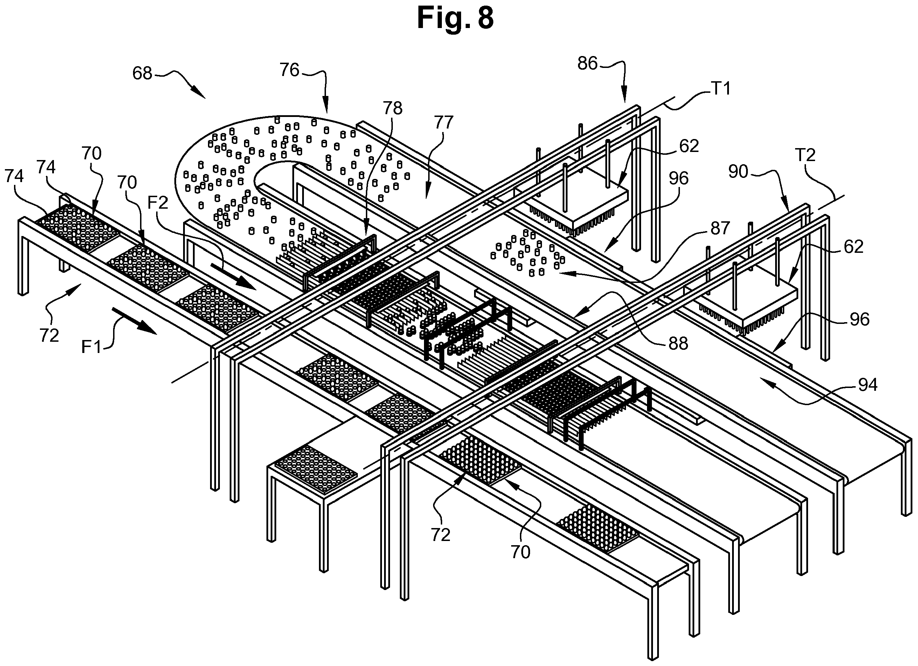

Sur la figure 8 on a représenté une installation 68 de remplissage de plateaux 70 de transport d'oeufs équipée de plusieurs navettes de préhension 62, ici deux, telles que celle de la figure 5.

Cette installation 68 comporte une première ligne de convoyage 72, ou ligne de convoyage principale, qui est prévue pour alimenter l'installation 68 avec des plateaux 70 de transport d'oeufs comportant N logements 74 aptes à recevoir chacun un oeuf 14 en position verticale.

Dans la partie en bas à gauche de la figure 8 on voit la première ligne de convoyage 72 où arrivent des groupes de deux plateaux 70 adjacents remplis de manière incomplète d'un nombre M d'oeufs 14, M étant inférieur à N. Ces plateaux 70 sont convoyés selon une première direction de flux F1, de la gauche vers la droite en considérant la figure 8.

Selon l'exemple de réalisation représenté, les plateaux 70 arrivent par paires. Bien entendu, l'invention s'applique aussi au cas où on traite chaque plateau 70 individuellement et non pas par paire.

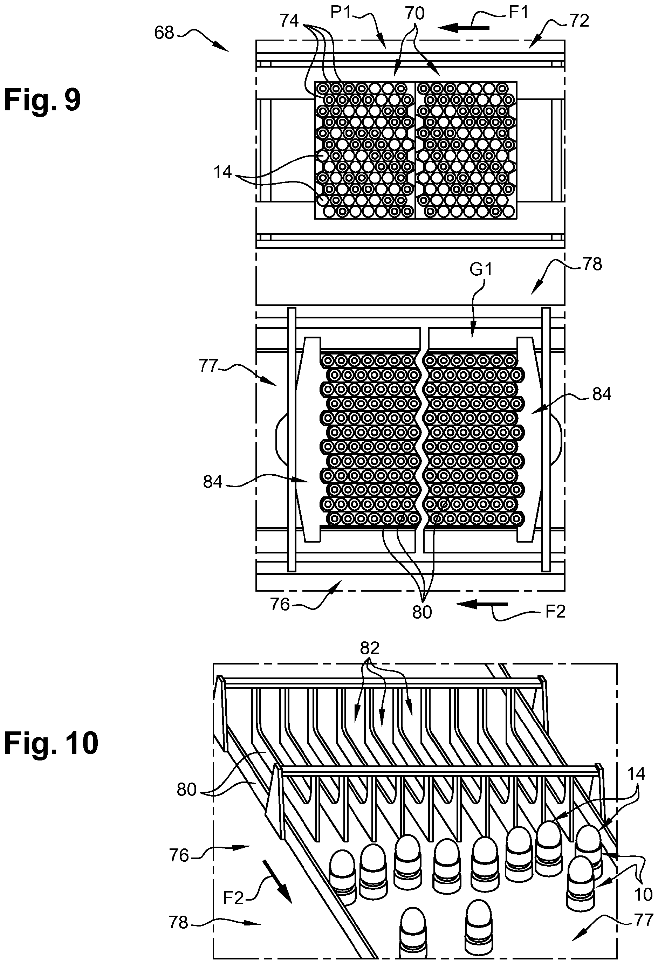

La figure 9 représente dans sa partie supérieure un tronçon de cette première ligne de convoyage 72 avec deux plateaux 70 adjacents, ici remplis partiellement d'oeufs 14. De manière schématique, les logements 74 vides sont ici représentés sous la forme d'un rond avec un petit cercle à l'intérieur, alors que les logements 74 pleins, c'est-à-dire contenant un oeuf 14, sont représentées sous la forme d'un rond simple.

L'installation comporte une seconde ligne de convoyage 76 qui est prévue pour convoyer des dispositifs individuels 10 parallèlement à la première ligne de convoyage 72, selon une seconde direction de flux F2, également de la gauche vers la droite en considérant la figure 8. Cette seconde ligne de convoyage 76 comprend ici un tapis roulant 77 qui amène des dispositifs individuels 10 placés de manière désordonnée, jusqu'à un premier poste de regroupement 78.

Le premier poste de regroupement 78 est illustré par la partie inférieure de la figure 9 et par les vues des figures 10 à 13. Il est placé au-dessus du tapis roulant 77 et il comporte une série de parois longitudinales 80 parallèles au flux F2, et formant un nombre K de rayons 82. Chaque rayon 82 a une largeur sensiblement égale au diamètre extérieur d'un dispositif individuel 10. Ainsi, tous les dispositifs individuels 10 vides qui arrivent de l'amont sont dirigés vers les rayons 82 pour former des lignes de dispositifs individuels 10. Le premier poste de regroupement 78 comporte des taquets 84, ou râteaux de blocage, qui retiennent en aval et en amont un premier groupe G1 de dispositifs individuels 10 dont le nombre correspond au nombre N de logements 74 sur les plateaux 70 de transport d'oeufs.

L'installation 68 comporte une première navette de préhension 62 qui est montée mobile sur un premier portique 86 de manière à pouvoir se déplacer transversalement T1 par rapport aux flux F1, F2. La première navette 62 permet de venir saisir les oeufs 14 présents sur les plateaux 70 de transport arrivant sur la première ligne de convoyage 72, plateaux 70 incomplets formant un premier chargement P1, et à les transporter jusqu'au premier groupe G1 de dispositifs individuels 10 où elle les dépose.

La figure 9 illustre le premier poste de regroupement 78 lorsqu'il est prêt à recevoir les oeufs 14 de la première ligne de convoyage 72, le regroupement ayant permis de créer un premier groupe G1 de dispositifs individuels 10 apte à recevoir tous les oeufs 14 présents sur les deux plateaux 70 de la première ligne de convoyage 72.

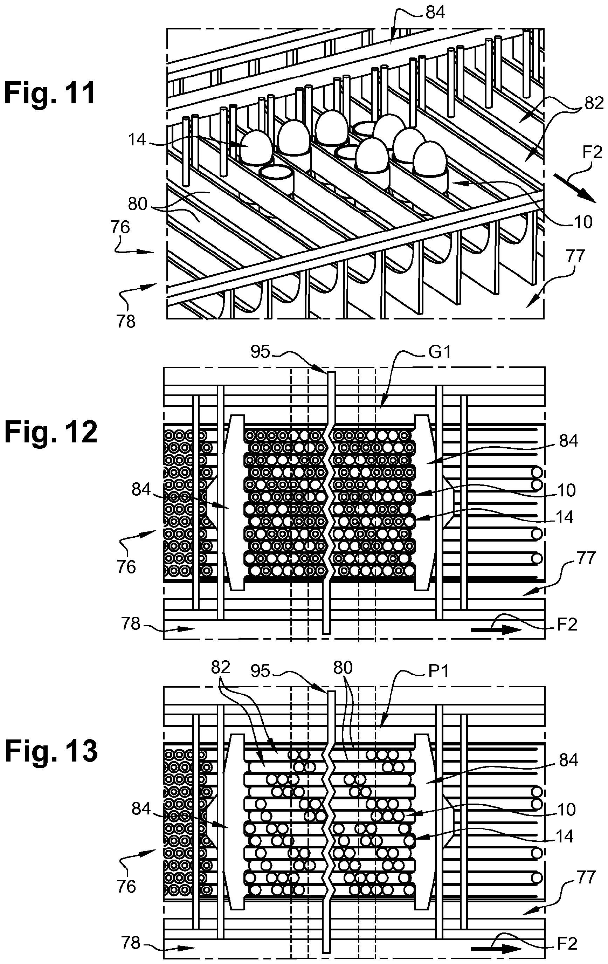

La figure 12 illustre le premier poste de regroupement 78 après que la première navette 62 ait déposé tous les oeufs 14 saisis dans les dispositifs individuels 10 correspondants. On note que le motif décrit par la combinaison de dispositifs individuels 10 vides et de dispositifs individuels 10 pleins correspond ici au motif des plateaux 70 représentés sur la figure 9 puisque la navette de préhension 62 s'est contentée de prendre les oeufs 14 là où ils étaient et de les déposer selon le même agencement sur la seconde ligne de convoyage 76.

En venant déposer les oeufs 14 du premier chargement P1 dans le premier groupe G1 de dispositifs individuels 10, la première navette de préhension 62 vient aussi agripper les dispositifs individuels 10 vides dans lesquels aucun oeuf 14 n'est déposé. En effet, en se déplaçant vers le bas pour venir déposer délicatement chaque oeuf 14 dans un dispositif individuel 10, en relâchant l'aspiration par les ventouses 56 avec une légère surpression d'air, les embouts de préhension 48 viennent également au contact du fond des réceptacles 28 ce qui provoque l'adhérence des dispositifs individuels 10 associés par attraction magnétique.

La première navette de préhension 62 permet ainsi de transporter les dispositifs individuels vides 10 vers l'amont de la seconde ligne de convoyage 76, ici vers un poste d'alimentation intermédiaire 87 en amont de la seconde ligne de convoyage 76 qui est agencé parallèlement à la portion où est agencé le premier poste de regroupement 78. Ce poste d'alimentation intermédiaire 87 est ici relié à la portion où est agencé le premier poste de regroupement 78 par un virage.

La figure 13 représente le premier poste de regroupement 78 juste après que les dispositifs individuels 10 vides aient été saisis par la première navette de préhension 62. On note qu'il ne reste que des dispositifs individuels 10 occupés par des oeufs 14 et des espaces vides entre eux.

Après que les dispositifs individuels 10 vides aient été retirés du premier poste de regroupement 78, le taquet 84 situé en aval se soulève ce qui permet de laisser passer les dispositifs individuels 10 restants, tous munis d'oeufs 14, pour qu'ils se déplacent vers l'aval, selon le second flux F2 grâce au tapis roulant 77 qui fonctionne de manière continue.

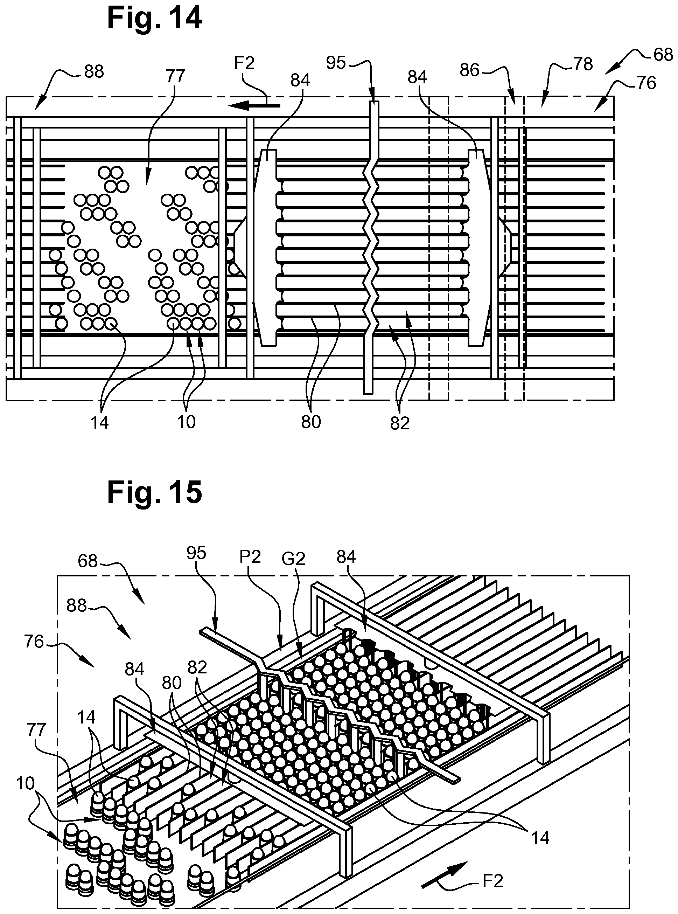

La figure 14 illustre l'évacuation des dispositifs individuels 10 restants vers l'aval. Les dispositifs individuels 10 se déplacent avec le tapis roulant 77 pour être regroupés en aval sur un second poste de regroupement 88.

Le second poste de regroupement 88, qui est illustré notamment par la figure 15, est similaire au premier poste 78 dans sa structure. Il vise à permettre le regroupement de dispositifs individuels 10 qui sont tous occupés par un oeuf 14. Ce second poste 88 permet donc de former un second groupe G2 de dispositifs individuels 10 comportant N oeufs afin de pouvoir remplir ensuite des plateaux 70 de transport d'oeufs comportant N logements 74.

C'est pourquoi l'installation 68 comporte ici une seconde navette de préhension 62 qui est montée mobile sur un second portique 90 de manière à pouvoir se déplacer transversalement T2 par rapport aux flux F1, F2. La seconde navette de préhension 62 permet de venir saisir les N oeufs 14 présents dans les N dispositifs individuels 10 du second groupe G2, et à les transporter jusqu'à la première ligne de convoyage 72 et les déposer sur des plateaux 70 de transport d'oeufs vides à N logements 74.

A cet effet, la seconde navette de préhension 62 vient se placer au-dessus des N oeufs 14 du second groupe G2, visible sur la figure 15, et descend les organes de préhension 12 jusqu'à ce que les N ventouses 56 puissent venir saisir les N oeufs 14 par aspiration pour former un second chargement P2 d'oeufs 14. La seconde navette de préhension 62 peut alors remonter les organes de préhension 12 munis des oeufs 14 et se déplacer selon la seconde direction transversale T2 jusqu'à une zone de dépose 92 de la première ligne de convoyage 72 où attendent deux plateaux 70 vides. Arrivée au-dessus des plateaux 70 vides, la seconde navette de préhension 62 vient déposer les N oeufs 14 dans les N logements 74 en descendant les organes de préhension 12 et en relâchant l'aspiration dans les ventouses 76, voire en appliquant une légère pression d'air dans les ventouses 76 pour décrocher les oeufs 14.

L'installation 68 selon l'invention fournit ainsi, à la sortie de la première ligne de convoyage 72, des plateaux 70 de transport d'oeufs complets qui peuvent être envoyés vers une étape ultérieure de traitement, d'incubation ou pour réaliser toute autre opération sur les plateaux 70 ou sur les oeufs 14.

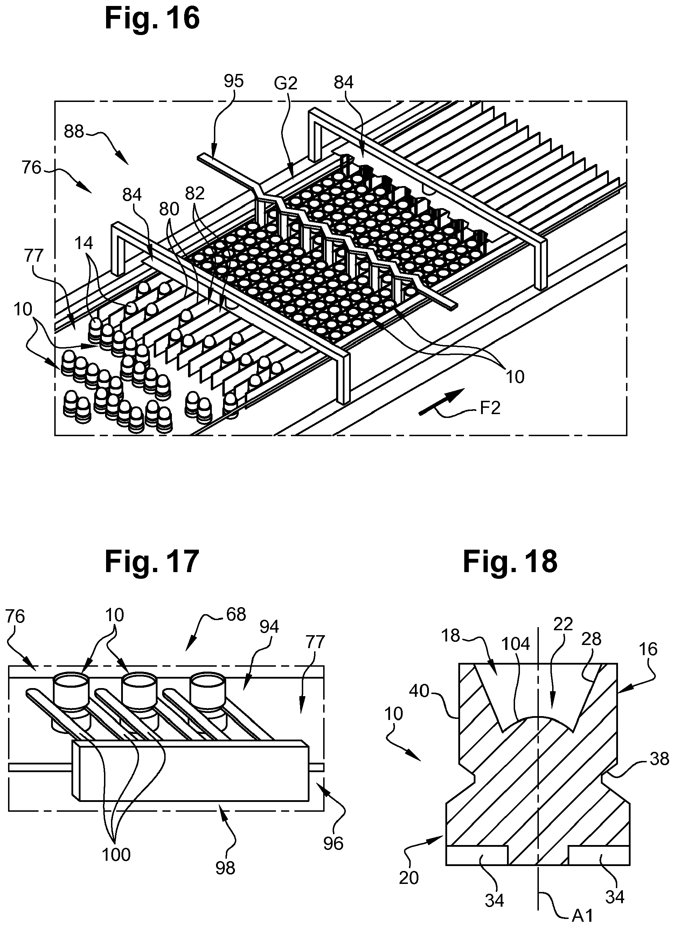

Après avoir déposé les N oeufs 14 dans les N logements 74 sur la première ligne de convoyage 72, la seconde navette de préhension 62 peut venir reprendre les N dispositifs individuels 10 vides, qui sont représentés sur la figure 16, pour les déposer ensuite dans une zone d'alimentation amont 94 sur la seconde ligne de convoyage 76. A cet effet, il suffit que la seconde navette de préhension 62 amène les N organes de préhension 12 jusqu'à ce que les embouts de préhension 48 s'accouplent au fond des réceptacles 28 avec les dispositifs individuels 10 vides. Puis la seconde navette de préhension 62 remonte et se déplace transversalement T2 jusqu'à la zone d'alimentation amont 94.

Avantageusement, selon le mode de réalisation représenté, le premier poste de regroupement 78 et le second poste de regroupement 88 comportent chacun un râteau d'espacement 95 escamotable qui permet d'espacer les dispositifs individuels 10, et donc les oeufs 14, au niveau de la jonction entre la première et la seconde moitiés des oeufs 14 qui correspondent respectivement aux premier et second plateaux 70 de la paire de plateaux 70. Bien entendu, dans le cas où l'installation 68 fonctionner plateau par plateau et non par paire de plateaux 70, alors ce râteau d'espacement 95 n'est pas nécessaire.

Pour pouvoir déposer les dispositifs individuels 10 vides sur la seconde ligne de convoyage 76, un dispositif de décrochage 96 des dispositifs individuels 10 est prévu dans l'installation 68.

Selon un premier mode de réalisation, qui est illustré par la figure 17, le dispositif de décrochage 96 comporte des fourchettes 98 formées de tiges 100 parallèles. Ces tiges 100 sont prévues pour être reçues tangentiellement dans les gorges périphériques 38 des dispositifs individuels 10 lorsqu'une navette de préhension 62 vient les poser sur le tapis roulant 77. Les fourchettes 98 permettent de retenir axialement les dispositifs individuels 10 sur le tapis roulant 77 lorsque la navette de préhension 62 remonte avec ses tiges de préhension 44. Ce mécanisme permet de vaincre l'attraction magnétique exercée par les aimants 24 sur les embouts de préhension 48. Une fois que les dispositifs individuels 10 sont décrochés des organes de préhension 12, les fourchettes 98 s'escamotent pour permettre aux dispositifs individuels 10 de continuer leur déplacement avec le tapis roulant 77 jusqu'au premier poste de regroupement 78.

Selon un second mode de réalisation, qui est illustré par la figure 8, le dispositif de décrochage 96 comporte une plaque aimantée 102 qui vient se positionner sous le tapis roulant 77 lorsqu'une navette de préhension 62 vient poser les dispositifs individuels 10 vides sur le tapis roulant 77. Cette plaque aimantée 102 permet également de vaincre l'attraction magnétique exercée par les aimants 24 sur les embouts de préhension 48, en attirant les dispositifs individuels 10 vers le bas, ce qui permet de décrocher les dispositifs individuels 10 des organes de préhension 12.

Une fois que les dispositifs individuels 10 sont décrochés des organes de préhension 12, la plaque aimantée 102 s'escamote pour permettre aux dispositifs individuels 10 de continuer leur déplacement avec le tapis roulant 77 jusqu'au premier poste de regroupement 78.

On décrit maintenant un procédé de remplissage des plateaux 70 de transport d'oeufs selon l'invention. Ce procédé comporte les étapes suivantes :
- alimentation de la première ligne de convoyage 72 en plateaux 70 de transport d'oeufs comportant N logements 74 aptes à recevoir chacun un oeuf 14 en position verticale,
- alimentation de la seconde ligne de convoyage 76 en dispositifs individuels 10 vides,
- une première étape de transport d'un premier chargement P1 d'oeufs 14 avec la première navette de préhension 62, depuis un premier plateau 70 de la première ligne de convoyage 72 jusqu'au premier groupe G1 de dispositifs individuels 10 placé sur la seconde ligne de convoyage 76,
- une étape de regroupement au cours de laquelle les dispositifs individuels 10 sont regroupés pour former le second groupe G2 de dispositifs individuels 10 sur la seconde ligne de convoyage 76,
- une seconde étape de transport d'un second chargement d'oeufs 14 disposé dans le second groupe G2 de dispositifs individuels 10 jusqu'à un plateau 70 comportant N logements 74 vides sur la première ligne de convoyage 72.

Selon une variante de réalisation, la première ligne de convoyage 72 peut être dédiée pour l'alimentation en plateaux 70 de transport d'oeufs incomplets, et une troisième ligne de convoyage est prévue pour récupérer le second chargement d'oeufs et sortir des plateaux 70 remplis d'oeufs 14 dans tous les logements 74. Cette variante de réalisation permet par exemple d'alimenter l'installation 68 avec des plateaux 70 de transport d'oeufs comportant N logements 74 et remplir à la sortie des plateaux 70 de transport d'oeufs comportant X logements 74, le nombre X de logements 74 pouvant être égal ou différent du nombre N de logements 74 en entrée. Dans ce cas le second poste de regroupement 88 est prévu pour former un second groupe G2 comportant X dispositifs individuels 10 remplis d'oeufs 14.

Selon une variante de réalisation, le premier portique 86 peut comporter une troisième navette de préhension 62 qui permet de transporter les dispositifs individuels 10 vides restant au premier poste de regroupement 78 pendant que la première navette de préhension 62 va chercher et transporte les oeufs 14 de la première ligne de convoyage 72 à la seconde ligne de convoyage 76. Dans ce cas, la troisième navette de préhension 62 est dédiée au transfert des dispositifs individuels 10 vides depuis le premier poste de regroupement 78 jusqu'au poste d'alimentation intermédiaire 87, ou troisième poste.

Selon une variante de réalisation, qui est représentée sur la figure 18, la coupelle supérieure 18 est pourvue dans le fond du réceptacle 28 d'une surface prévue pour une saisie par une ventouse 56, en plus ou en remplacement du système d'aimant 24. Avantageusement cette surface est un bossage 104, de préférence lisse ou poli. Ce bossage 104 permet une préhension du dispositif individuel 10 par aspiration avec la ventouse 56 servant à la préhension des oeufs 14. Le bossage 104 a ici la forme d'une surface bombée convexe se rapprochant de la forme d'un oeuf 14 pour faciliter la préhension du dispositif individuel 10 par la même ventouse 56 que celle prévue pour saisir un oeuf 14.

Selon cette variante de réalisation, l'organe de préhension 12 ne comporte que la ventouse 56, mais peut aussi comporter à la fois la ventouse 56 et l'aimant avec la tige de préhension 44. L'organe de préhension 12 peut donc saisir soit un dispositif individuel 10 vide, soit un oeuf 14 et la navette de préhension 62 peut donc saisir à la fois des dispositifs individuels 10 vides et des oeufs 14, mais aussi distinctement des oeufs 14 ou des dispositifs individuels 10 vides, suivant le choix d'aspirer ou non sur chaque ventouse 56.

On note qu'il est possible de faire de l'aspiration/soufflage mécanique, un déblocage de l'aspiration se ferait mécaniquement au contact d'un oeuf, ou pas d'aspiration si pas de contact avec un oeuf.

La différence entre cette variante de réalisation et le mode de réalisation principal décrit précédemment réside dans la gestion de l'automatisme de commande des organes de préhension 12 : la version avec bossage 104 demande une gestion individuelle pour la préhension, le déplacement, et la dépose de chaque dispositif individuel 10. En effet, la navette de préhension 62 et la commande du système d'aspiration 58 doit savoir déterminer quels sont les organes de préhension 12 munis de dispositifs individuels 10 à relâcher et quels sont les organes de préhension 12 portant des oeufs 14.

Un avantage de la solution avec aimant représentée précédemment est que la gestion de l'automatisme pour contrôler la préhension et le déplacement de la navette de préhension 62 est plus simple puisque les dispositifs individuels 10 ne sont saisis par les organes de préhension 12 que s'ils sont vides, alors que s'ils sont pleins, les organes de préhension 12 ne peuvent saisir les oeufs 14 que si une aspiration est commandée à travers la ventouse 56.

Selon une variante de réalisation de l'installation 68 et du procédé de remplissage selon l'invention, il est possible de détecter à l'arrivée sur la première ligne de convoyage 72 si des plateaux 70 sont très remplis, par exemple remplis à plus de 75%, et dans ce cas de ne pas les vider. On prévoit alors de former sur la seconde ligne de convoyage 78, avec un agencement adéquat des oeufs 14 dans les dispositifs individuels 10, un motif de remplissage d'oeufs qui permettent de venir compléter les plateaux 70 très remplis sur la première ligne de convoyage 72 en venant déposer les oeufs 14 au moyen de la seconde navette de préhension 62 uniquement dans les logements 74 vides des plateaux 70.

Le dispositif individuel 10, l'installation 68, et le procédé de remplissage selon l'invention permettent le remplissage complémentaire de plateaux 70 de transport d'oeufs en permettant de compléter des plateaux 70 partiellement remplis avec des oeufs 14 de sorte que tous les logements 74 du plateau 70 se trouvent occupés en sortie de ligne de convoyage.

### LEGENDE

- 10 :: dispositif individuel
- 12 :: organe de préhension
- 14 :: oeuf
- 16 :: corps principal
- 18 :: coupelle supérieure
- 20 :: socle
- 22 :: élément de préhension
- 24 :: aimant
- 26 :: fût
- 28 :: réceptacle
- 30 :: capot inférieur
- 32 :: entretoise
- 34 :: rondelle métallique
- 36 :: surface inférieure
- 38 :: gorge périphérique
- 40 :: partie supérieure
- 42 :: bras
- 44 :: tige de préhension
- 46 :: tube principal
- 48 :: embout de préhension
- 50 :: butée
- 52 :: rétrécissement
- 54 :: extrémité libre
- 56 :: ventouse
- 58 :: système d'aspiration d'air
- 60 :: fond du réceptacle
- 62 :: navette de préhension
- 64 :: platine principale
- 66 :: système de réglage de l'espacement radial
- 68 :: installation
- 70 :: plateau
- 72 :: première ligne de convoyage
- 74 :: logement
- 76 :: seconde ligne de convoyage
- 77 :: tapis roulant
- 78 :: premier poste de regroupement
- 80 :: paroi longitudinale
- 82 :: rayon
- 84 :: taquet
- 86 :: premier portique
- 87 :: poste d'alimentation intermédiaire
- 88 :: second poste de regroupement
- 90 :: second portique
- 92 :: zone de dépose
- 94 :: zone d'alimentation amont
- 95 :: râteau d'espacement
- 96 :: dispositif de décrochage
- 98 :: fourchette
- 100 :: tige
- 102 :: plaque aimantée
- 104 :: bossage
- A1 :: axe principal
- F1 :: première direction de flux
- F2 :: seconde direction de flux
- G1 :: premier groupe
- G2 :: second groupe
- P1 :: premier chargement
- P2 :: second chargement
- T1 :: direction transversale du premier portique
- T2 :: direction transversale du second portique

## Revendications

1. Dispositif individuel (10) de transport d'oeuf, comportant :
- une coupelle supérieure (18) prévue pour recevoir un œuf (14),
- un socle (20) prévu pour assurer une position stable de la coupelle supérieure (18) sur un élément de convoyage (77), **caractérisé en ce qu'**il comporte :
- un élément de préhension (22) permettant à un organe de préhension (12) de saisir le dispositif individuel (10) pour le transporter d'un premier emplacement à un second emplacement.

2. Dispositif individuel (10) selon la revendication précédente, **caractérisé en ce que** l'élément de préhension (22) comprend un aimant (24), ou une pièce métallique, qui est agencé sous la coupelle supérieure (18) pour permettre à l'organe de préhension (12) de saisir le dispositif individuel (10) par attraction magnétique.

3. Dispositif individuel (10) selon l'une quelconque des revendications précédentes, **caractérisé en ce qu'**il comporte une surface tel qu'un bossage (104) apte à permettre la préhension du dispositif individuel par une ventouse (56).

4. Dispositif individuel (10) selon l'une quelconque des revendications précédentes, **caractérisé en ce qu'**il comporte une gorge périphérique (38).

5. Dispositif individuel (10) selon l'une quelconque des revendications précédentes, **caractérisé en ce que** le socle (20) comporte des pastilles métalliques (34) réparties sur le fond du socle (20).

6. Organe de préhension (12) destiné à saisir un dispositif individuel (10) de transport d'oeuf selon l'une des revendications précédentes, **caractérisé en ce qu'**il comporte un bras (42) muni d'une tige de préhension (44) qui est montée coulissante par rapport au bras (42), **en ce que** l'extrémité libre de la tige de préhension (44) comporte un embout de préhension (48) apte à saisir le dispositif individuel (10) par attraction magnétique, et **en ce que** le bras (42) comporte à son extrémité libre, du côté de l'embout de préhension (48), une ventouse (56) coaxiale à la tige de préhension (44), apte à saisir un oeuf (14) par aspiration.

7. Organe de préhension (12) selon la revendication précédente, **caractérisé en ce que** la tige de préhension (44) est montée libre en coulissement dans le bras (42).

8. Ensemble pour le transport d'oeuf, **caractérisé en ce qu'**il comporte un organe de préhension (12) selon l'une des revendications 6 ou 7 et un dispositif individuel (10) selon l'une des revendications 1 à 5.

9. Navette de préhension (62) mobile **caractérisée en ce qu'**elle comporte au moins N organes de préhension (12) selon la revendication 6 ou 7, ces N organes de préhension (12) étant aptes à saisir jusqu'à N oeufs (14) disposés soit dans N logements (74) d'un plateau (70) de transport d'oeufs, soit dans N dispositifs individuels (10) selon l'une des revendications 1 à 5.

10. Installation (68) de remplissage de plateaux (70) de transport d'oeufs **caractérisée en ce qu'**elle comporte :
- une première ligne de convoyage (72) qui est prévue pour alimenter l'installation (68) avec des plateaux (70) de transport d'oeufs comportant N logements (74) aptes à recevoir chacun un oeuf (14) en position verticale,
- une seconde ligne de convoyage (76) qui est prévue pour convoyer des dispositifs individuels (10) selon l'une des revendications 1 à 5,
- une troisième ligne de convoyage qui est prévue pour sortir des plateaux (70) de transport d'oeufs comportant X logements (74) aptes à recevoir chacun un oeuf (14) en position verticale
- au moins une navette de préhension (62) selon la revendication 9, qui est mobile entre la première ligne de convoyage (72) et la seconde ligne de convoyage (76), de manière à pouvoir :
-- au cours d'une première étape, saisir un premier chargement (P1) d'oeufs sur un premier plateau (70) comportant un nombre d'oeufs M inférieur à N, transporter le premier chargement (P1) d'oeufs jusqu'à la seconde ligne de convoyage (76), déposer le premier chargement (P1) d'oeufs dans un premier groupe (G1) de dispositifs individuels (10),
-- au cours d'une seconde étape, saisir un second chargement (P2) d'oeufs disposé dans un second groupe (G2) de dispositifs individuels (10) agencé sur la seconde ligne de convoyage (76), transporter le second chargement (P2) d'oeufs jusqu'à une troisième ligne de convoyage principale, déposer le second chargement (P2) d'oeufs dans les logements (74) d'un plateau (70) comportant X logements (74).

11. Installation (68) selon la revendication précédente, **caractérisée en ce que** la seconde ligne de convoyage (76) comporte un premier poste (78) en amont du flux (F2) de convoyage où les dispositifs individuels (10) sont regroupés pour former le premier groupe (G1), et un second poste (88) en aval du flux (F2) de convoyage où les dispositifs individuels (10) sont regroupés pour former le second groupe (G2).

12. Installation (68) selon la revendication précédente, **caractérisée en ce qu'**elle comporte une première navette de préhension (62) selon la revendication 9 qui transporte le premier chargement (P1) d'oeufs et une seconde navette de préhension (62) selon la revendication 9 qui est mobile entre le premier poste (78) et un troisième poste (87) agencé en amont, par rapport au premier poste (78), de manière à pouvoir transporter les dispositifs individuels (10) vides du premier groupe (G1) depuis le premier poste (78) jusqu'au troisième poste (87).

13. Installation (68) selon la revendication précédente, **caractérisée en ce qu'**elle comporte une troisième navette de préhension (62) selon la revendication 9 qui transporte le second chargement (P2) d'oeufs.

14. Installation (68) selon l'une quelconque des revendications 10 à 13, **caractérisée en ce que** la première ligne de convoyage (72) et la troisième ligne de convoyage forment une seule ligne de convoyage (72) principale et **en ce que** le nombre N de logements (74) est égal au nombre X de logements (74).

15. Procédé de remplissage de plateaux (70) de transport d'oeufs, **caractérisé en ce qu'**il comporte les étapes suivantes :
- alimentation d'une première ligne de convoyage (72) en plateaux (70) de transport d'oeufs comportant N logements (74) aptes à recevoir chacun un oeuf (14) en position verticale,
- alimentation d'une seconde ligne de convoyage (76) en dispositifs individuels (10) selon l'une des revendications 1 à 5,
- une première étape de transport d'un premier chargement (P1) d'oeufs avec la navette de préhension (62) selon la revendication 9, depuis un premier plateau (70) de la première ligne de convoyage (72) jusqu'à un premier groupe (G1) de dispositifs individuels (10) placé sur la seconde ligne de convoyage (76),
- une étape de regroupement au cours de laquelle les dispositifs individuels (10) sont regroupés pour former un second groupe (G2) de dispositif individuels (10) sur la seconde ligne de convoyage (76),
- une seconde étape de transport d'un second chargement (P2) d'oeufs disposé dans le second groupe (G2) de dispositifs individuels (10) jusqu'à un plateau (70) comportant X logements (74) sur la troisième ligne de convoyage.

## Patentansprüche

1. Eier-Einzeltransportvorrichtung (10), umfassend:
- einen oberen Becher (18), der zur Aufnahme eines Eis (14) bestimmt ist,
- eine Basis (20), die dazu vorgesehen ist, eine stabile Position des oberen Bechers (18) auf einem Förderelement (77) zu gewährleisten,
**dadurch gekennzeichnet, dass** sie Folgendes umfasst:
- ein Greifelement (22), das es einem Greiforgan (12) ermöglicht, die Einzelvorrichtung (10) zu erfassen, um sie von einem ersten Ort zu einem zweiten Ort zu transportieren.

2. Einzelvorrichtung (10) nach dem vorstehenden Anspruch,
**dadurch gekennzeichnet, dass** das Greifelement (22) einen Magneten (24) oder ein Metallteil umfasst, der/das unter dem oberen Becher (18) eingerichtet ist, um es dem Greiforgan (12) zu ermöglichen, die Einzelvorrichtung (10) durch magnetische Anziehung zu erfassen.

3. Einzelvorrichtung (10) nach einem der vorstehenden Ansprüche,
**dadurch gekennzeichnet, dass** sie eine Oberfläche wie einen Vorsprung (104) umfasst, der das Greifen der Einzelvorrichtung durch einen Saugnapf (56) ermöglicht.

4. Einzelvorrichtung (10) nach einem der vorstehenden Ansprüche,
**dadurch gekennzeichnet, dass** sie eine umlaufende Rille (38) umfasst.

5. Einzelvorrichtung (10) nach einem der vorstehenden Ansprüche,
**dadurch gekennzeichnet, dass** die Basis (20) Metallpads (34) umfasst, die auf der Unterseite der Basis (20) verteilt sind.

6. Greiforgan (12) zum Erfassen einer Eier-Einzeltransportvorrichtung (10) nach einem der vorstehenden Ansprüche, **dadurch gekennzeichnet, dass** es einen Arm (42) umfasst, der mit einer Greifstange (44) versehen ist, die relativ zum Arm gleitend montiert ist (42), dadurch, dass das freie Ende der Greifstange (44) einen Greifeinsatz (48) umfasst, der in der Lage ist, die Einzelvorrichtung (10) durch magnetische Anziehung zu erfassen, und dadurch, dass der Arm (42) an seinem freien Ende auf der Seite des Greifeinsatzes (48) einen Saugnapf (56) koaxial zur Greifstange (44) umfasst, der in der Lage ist, ein Ei (14) durch Ansaugen zu erfassen.

7. Greiforgan (12) nach dem vorstehenden Anspruch,
**dadurch gekennzeichnet, dass** die Greifstange (44) frei gleitend im Arm (42) montiert ist.

8. Anordnung zum Transport von Eiern, **dadurch gekennzeichnet, dass** sie ein Greiforgan (12) nach einem der Ansprüche 6 oder 7 und eine Einzelvorrichtung (10) nach einem der Ansprüche 1 bis 5 umfasst.

9. Greifshuttle (62), **dadurch gekennzeichnet, dass** es mindestens N Greiforgane (12) nach Anspruch 6 oder 7 umfasst, wobei diese N Greiforgane (12) in der Lage sind, bis zu N Eier (14) zu erfassen, die entweder in N Aufnahmen (74) einer Eiertransportpalette (70), oder in N Einzelvorrichtungen (10) nach einem der Ansprüche 1 bis 5 angeordnet sind.

10. Anlage (68) zum Befüllen von Eiertransportpaletten (70),
**dadurch gekennzeichnet, dass** sie umfasst:
- eine erste Förderstrecke (72), die dazu bestimmt ist, die Anlage (68) mit Eiertransportpaletten (70) zu beschicken, die N Aufnahmen (74) umfassen, die in der Lage sind, jeweils ein Ei (14) in vertikaler Position aufzunehmen,
- eine zweite Förderstrecke (76), die zum Fördern von Einzelvorrichtungen (10) nach einem der Ansprüche 1 bis 5 bestimmt ist,
- eine dritte Förderstrecke, die dazu bestimmt ist, die Eiertransportpaletten (70), die X Aufnahmen (74) umfassen, die jeweils ein Ei (14) in vertikaler Position aufnehmen können, auszuschleusen
- mindestens ein Greifshuttle (62) nach Anspruch 9, das zwischen der ersten Förderstrecke (72) und der zweiten Förderstrecke (76) verfahrbar ist, um in der Lage zu sein:
-- in einem ersten Schritt eine erste Ladung (P1) Eier auf einer ersten Palette (70) zu erfassen, die eine Anzahl von Eiern M kleiner als N umfasst, die erste Ladung (P1) Eier zur zweiten Förderstrecke (76) zu transportieren, die erste Ladung (P1) Eier in einer ersten Gruppe (G1) von Einzelvorrichtungen (10) abzulegen,
-- in einem zweiten Schritt eine zweite Ladung (P2) Eier zu erfassen, die in einer zweiten Gruppe (G2) von Einzelvorrichtungen (10) angeordnet sind, die auf der zweiten Förderstrecke (76) eingerichtet ist, die zweite Ladung (P2) Eier zu einer dritten Hauptförderstrecke zu transportieren, die zweite Ladung (P2) Eier in den Aufnahmen (74) einer Palette (70) abzulegen, die X Aufnahmen (74) umfasst.

11. Anlage (68) nach dem vorstehenden Anspruch,
**dadurch gekennzeichnet, dass** die zweite Förderstrecke (76) eine erste dem Förderstrom (F2) vorgelagerte Station (78) umfasst, an der die Einzelvorrichtungen (10) zur Bildung der ersten Gruppe (G1) gruppiert werden, und eine dem Förderstrom (F2) nachgelagerte zweite Station (88), an der die Einzelvorrichtungen (10) zur Bildung der zweiten Gruppe (G2) gruppiert werden.

12. Anlage (68) nach dem vorstehenden Anspruch,
**dadurch gekennzeichnet, dass** sie ein erstes Greifshuttle (62) nach Anspruch 9 umfasst, das die erste Ladung (P1) Eier transportiert, und ein zweites Greifshuttle (62) nach Anspruch 9, das zwischen der ersten Station (78) und einer relativ zur ersten Station (78) vorgelagerten dritten Station (87) verfahrbar ist, um die leeren Einzelvorrichtungen (10) der ersten Gruppe (G1) von der ersten Station (78) zur dritten Station (87) transportieren zu können.

13. Anlage (68) nach dem vorstehenden Anspruch,
**dadurch gekennzeichnet, dass** sie ein drittes Greifshuttle (62) nach Anspruch 9 umfasst, das die zweite Ladung (P2) Eier transportiert.

14. Anlage (68) nach einem der Ansprüche 10 bis 13,
**dadurch gekennzeichnet, dass** die erste Förderstrecke (72) und die dritte Förderstrecke eine einzige Hauptförderstrecke (72) bilden und dadurch, dass die Anzahl N der Aufnahmen (74) gleich der Anzahl X der Aufnahmen (74) ist.

15. Verfahren zum Befüllen von Eiertransportpaletten (70),
**dadurch gekennzeichnet, dass** es folgende Schritte umfasst:
- Beschicken einer ersten Förderstrecke (72) mit Eiertransportpaletten (70), die N Aufnahmen (74) umfassen, die in der Lage sind, jeweils ein Ei (14) in vertikaler Position aufzunehmen,
- Beschicken einer zweiten Förderstrecke (76) mit Einzelvorrichtungen (10) nach einem der Ansprüche 1 bis 5,
- einen ersten Schritt zum Transport einer ersten Ladung (P1) Eier mit dem Greifshuttle (62) nach Anspruch 9 von einer ersten Palette (70) der ersten Förderstrecke (72) zu einer ersten Gruppe (G1) von Einzelvorrichtungen (10), die auf der zweiten Förderstrecke (76) platziert ist,
- einen Gruppierungsschritt, bei dem die Einzelvorrichtungen (10) zu einer zweiten Gruppe (G2) von Einzelvorrichtungen (10) auf der zweiten Förderstrecke (76) gruppiert werden,
- einen zweiten Schritt zum Transport einer zweiten Ladung (P2) Eier, die in der zweiten Gruppe (G2) von Einzelvorrichtungen (10) angeordnet sind, zu einer Palette (70), die X Aufnahmen (74) auf der dritten Förderstrecke umfasst.

## Claims

1. An individual egg transport device (10), including:
- an upper cup (18) provided to receive an egg (14),
- a base (20) provided to ensure a stable position of the upper cup (18) on a conveying element (77),
**characterized in that** it includes:
- a gripping element (22) allowing a gripping member (12) to grasp the individual device (10) in order to transport it from a first location to a second location.

2. The individual device (10) according to the preceding claim, **characterized in that** the gripping element (22) comprises a magnet (24), or a metal part, which is arranged under the upper cup (18) to allow the gripping member (12) to grasp the individual device (10) by magnetic attraction.

3. The individual device (10) according to any one of the preceding claims, **characterized in that** it includes a surface such as a bump (104) capable of allowing the individual device to be gripped by a suction cup (56).

4. The individual device (10) according to any one of the preceding claims, **characterized in that** it includes a peripheral groove (38).

5. The individual device (10) according to any one of the preceding claims, **characterized in that** the base (20) includes metal pellets (34) distributed on the bottom of the base (20).

6. A gripping member (12) intended to grasp an individual egg transport device (10) according to one of the preceding claims, **characterized in that** it includes an arm (42) provided with a gripping rod (44) which is slidably mounted relative to the arm (42), **in that** the free end of the gripping rod (44) includes a gripping tip (48) capable of grasping the individual device (10) by magnetic attraction, and **in that** the arm (42) includes at its free end, on the side of the gripping tip (48), a suction cup (56) coaxial with the gripping rod (44), able to grasp an egg (14) by suction.

7. The gripping member (12) according to the preceding claim, **characterized in that** the gripping rod (44) is mounted free to slidably move in the arm (42).

8. An assembly for egg transport, **characterized in that** it includes a gripping member (12) according to one of claims 6 or 7 and an individual device (10) according to one of claims 1 to 5.

9. A movable gripping shuttle (62) **characterized in that** it includes at least N gripping members (12) according to claim 6 or 7, these N gripping members (12) being able to grasp up to N eggs (14) arranged either in N housings (74) of an egg transport tray (70), or in N individual devices (10) according to one of claims 1 to 5.

10. A facility (68) for filling egg transport trays (70), **characterized in that** it includes:
- a first conveyor line (72) which is provided to supply the facility (68) with transport trays (70) of eggs comprising N housings (74) each able to receive an egg (14) in the vertical position,
- a second conveyor line (76) which is provided to convey individual devices (10) according to one of the claims 1 to 5,
- a third conveyor line which is provided to output egg transport trays (70) comprising X housings (74) each able to receive an egg (14) in the vertical position
- at least one gripping shuttle (62) according to claim 9, which is movable between the first conveyor line (72) and the second conveyor line (76), so that it can:
-- during a first step, grasp a first load (P1) of eggs on a first tray (70) including a number of eggs M less than N, transport the first load (P1) of eggs to the second conveyor line (76), deposit the first load (P1) of eggs into a first group (G1) of individual devices (10),
-- during a second step, grasp a second load (P2) of eggs arranged in a second group (G2) of individual devices (10) arranged on the second conveyor line (76), transport the second load (P2) of eggs to a third main conveyor line, deposit the second load (P2) of eggs into the housings (74) of a tray (70) including X housings (74).

11. The facility (68) according to the preceding claim, **characterized in that** the second conveyor line (76) includes a first station (78) upstream of the conveying flow (F2) where the individual devices (10) are grouped to form the first group (G1), and a second station (88) downstream of the conveying flow (F2) where the individual devices (10) are grouped to form the second group (G2).

12. The facility (68) according to the preceding claim, **characterized in that** it includes a first gripping shuttle (62) according to claim 9 which transports the first egg load (P1) and a second gripping shuttle (62) according to claim 9 which is movable between the first station (78) and a third station (87) arranged upstream, relative to the first station (78), so as to be able to transport the empty individual devices (10) of the first group (G1) from the first station (78) to the third station (87).

13. The facility (68) according to the preceding claim, **characterized in that** it includes a third gripping shuttle (62) according to claim 9 which transports the second load (P2) of eggs.

14. The facility (68) according to any one of claims 10 to 13, **characterized in that** the first conveyor line (72) and the third conveyor line form a single main conveyor line (72) and **in that** the number N of housings (74) is equal to the number X of housings (74).

15. A method for filling egg transport trays (70), **characterized in that** it includes the following steps:
- supplying a first conveyor line (72) with egg transport trays (70) comprising N housings (74) each able to receive an egg (14) in the vertical position,
- supplying a second conveyor line (76) with individual devices (10) according to one of claims 1 to 5,
- a first step of transporting a first load (P1) of eggs with the gripping shuttle (62) according to claim 9, from a first tray (70) of the first conveyor line (72) to a first group (G1) of individual devices (10) placed on the second conveyor line (76),
- a grouping step during which the individual devices (10) are grouped to form a second group (G2) of individual devices (10) on the second conveyor line (76),
- a second step of transporting a second load (P2) of eggs arranged in the second group (G2) of individual devices (10) to a tray (70) comprising X housings (74) on the third conveyor line.
